# EUROPEAN PATENT SPECIFICATION

(11) **EP 4 609 308 B1**
(45) Date of publication and mention of the grant of the patent: **02.12.2026**
(21) Application number: 23794375.8
(22) Date of filing: 24.10.2023
(51) Int. Cl.: G06F 21/56

(54) **STACKED MALWARE DETECTOR FOR MOBILE PLATFORMS**
GESTAPELTER SCHADPROGRAMMDETEKTOR FÜR MOBILE PLATTFORMEN
DÉTECTEUR DE LOGICIEL MALVEILLANT EMPILÉ POUR PLATEFORMES MOBILES

(30) Priority: 26.10.2022 US 202218049654
(43) Date of publication of application: 03.09.2025
(73) Proprietor: Bitdefender IPR Management Ltd., 2012 Nicosia (CY)
(72) Inventor: STEFAN, Tudor, 330126 Deva (RO)
(74) Representative: Tuluca, F. Doina
(86) International application number: PCT/EP2023/079686
(87) International publication number: WO 2024/089050

(56) References cited:
- US-A1- 2020 364 338
- US-A1- 2022 179 948
- US-B1- 9 998 484

## Description

### BACKGROUND

The invention relates to computer security, and in particular to protecting users and devices against malicious software.

Malicious software, also known as malware, affects a great number of computer systems worldwide. In its many forms such as computer viruses, spyware, and ransomware, malware presents a serious risk to millions of computer users, making them vulnerable to fraud, loss of data and sensitive information, identity theft, and loss of productivity, among others. The explosive growth in mobile computing has only exacerbated computer security risks, with millions of devices such as smartphones and tablet computers constantly connected to the Internet and acting as potential targets for malware. In particular, on mobile platforms, malware may masquerade as *bona-fide* applications including games, news, and messaging platforms, thus tricking unsuspecting users into installing them. In some cases, the user may be completely unaware of any malicious activities happening under the hood of an apparently legit and entertaining interface.

Conventional methods of protecting against malware include executing security software on the respective devices. Detection methods typically include static analysis wherein target software is compared to a library of malware-indicative 'code signatures', and behavioral analysis wherein the security software monitors the target software for indications of malicious behavior. In response to detecting a malicious agent, security software may quarantine or prevent its further execution. Due to recent developments in artificial intelligence (AI) and machine learning (ML), some modern malware detectors currently rely on various flavors of artificial neural networks pre-trained on corpora of known malicious and clean samples. In a typical example, a neural network receives a vector of feature values characterizing a target software entity and outputs a label indicating whether the respective target software is malicious.

However, such AI approaches face substantial technical challenges. One example is the choice of input features. Typically there are no obvious or universal criteria for choosing which features of target software are more likely to reveal malice and/or to differentiate between malicious and benign behavior. Mobile computing platforms (smartphones, wearables, etc.) and Internet of Things (IoT) devices show substantially more variability in terms of hardware and software than personal computers. Therefore, it may be difficult to find malware-indicative features that work reliably across such a heterogeneous collection of devices. Furthermore, some features may not be reliable indicators of malice because the same software application may behave differently on distinct devices, depending on local operating system settings and permissions granted on each device.

Other reasons for software applications to show device-specific behavior are deliberate attempts by sophisticated malware to evade countermeasures. For instance, some malware refrains from malware-indicative behavior for extended periods of time, tricking security software into classifying it as benign. Some malware may tailor its behavior according to a type of device (e.g. smartphone vs. tablet, one manufacturer or model vs. another), a type of operating system, a current geographical location of the respective device, etc. Some malware further selects its victims by searching the respective device for indicators of a user's worth to the attacker. For instance, malware may determine what other software is currently installed on the respective device, and search for specific applications such as banking, social media, etc. Other malware may monitor a user's pattern of accessing various applications, online resources, etc. Such malware may then launch an attack only on carefully selected devices and/or against carefully selected users, when the respective attack is seen as more likely to pay off.

Another challenge facing Al-implemented antimalware solutions is the availability of the input features. Stated otherwise, even when a relevant feature set is known, some of the respective features may not be available at all times and/or on all client devices. This is particularly true for mobile computing platforms such as smartphones and wearables, among others, wherein extracting or evaluating certain features may require specific permissions from the user. Furthermore, extracting or evaluating some features may be relatively expensive in terms of computation, which may unacceptably alter the user experience especially on mobile platforms which typically have much fewer computational resources than personal computers and servers.

To address the feature selection and availability problems, some conventional approaches increase the count of features and therefore the size of AI models in an attempt to improve their performance. However, large neural networks are notoriously costly to implement and train in terms of computation and typically require large training corpora which are difficult to acquire, annotate, and maintain.

For all the reasons outlined above, there is a considerable ongoing effort and a sustained interest in developing robust and scalable computer security systems and methods capable of quickly and efficiently responding to emerging threats against mobile computing platforms. Patent document US2022/179948 discloses relevant prior art.

### SUMMARY

According to one aspect, a malware detection method comprises employing at least one hardware processor of a computer system to execute a plurality of feature processors configured to determine a plurality of derived feature values according to a plurality of primary feature values characterizing a software entity executing on the computer system, wherein a selected feature processor is configured to determine a selected derived feature value according to a selected subset of the plurality of primary feature values. The method further comprises, in response to executing the plurality of feature processors, determining whether the selected derived feature value is missing, and if yes, supplying a surrogate value to replace the missing selected derived feature value. The method further comprises employing at least one hardware processor of the computer system to determine whether the software entity is malicious according to derived feature values determined by the plurality of feature processors and further according to the surrogate feature value.

According to another aspect, a computer system comprises at least one hardware processor configured to execute a plurality of feature processors, a data substitution module, and a synthesizer module. The plurality of feature processors are configured to determine a plurality of derived feature values according to a plurality of primary feature values characterizing a software entity executing on the computer system, wherein a selected feature processor is configured to determine a selected derived feature value according to a selected subset of the plurality of primary feature values. The data substitution module is configured to determine whether the selected derived feature value is missing, and if yes, to supply a surrogate value to replace the missing selected derived feature value. The synthesizer module is configured to determine whether the software entity is malicious according to derived feature values determined by the plurality of feature processors and further according to the surrogate feature value.

According to another aspect, a non-transitory computer-readable medium stores instructions which, when executed by at least one hardware processor of a computer system, cause the computer system to form a plurality of feature processors, a data substitution module, and a synthesizer module. The plurality of feature processors are configured to determine a plurality of derived feature values according to a plurality of primary feature values characterizing a software entity executing on the computer system, wherein a selected feature processor is configured to determine a selected derived feature value according to a selected subset of the plurality of primary feature values. The data substitution module is configured to determine whether the selected derived feature value is missing, and if yes, to supply a surrogate value to replace the missing selected derived feature value. The synthesizer module is configured to determine whether the software entity is malicious according to derived feature values determined by the plurality of feature processors and further according to the surrogate feature value.

### BRIEF DESCRIPTION OF THE DRAWINGS

The foregoing aspects and advantages of the present invention will become better understood upon reading the following detailed description and upon reference to the drawings where:
Fig. **1** shows exemplary software executing on a client device, including a security application protecting the client device against malware according to some embodiments of the present invention.
Fig. **2** illustrates an exemplary structure and operation of a malware detector according to some embodiments of the present invention.
Fig. **3** shows an exemplary sequence of steps performed by the malware detector according to some embodiments of the present invention.
Fig. **4** shows a plurality of client devices protected from malware by a security server according to some embodiments of the present invention.
Fig. **5** shows an exemplary data exchange between a selected client device and the security server according to some embodiments of the present invention.
Fig. **6** shows another exemplary data exchange between the client device and the security server according to some embodiments of the present invention.
Fig. **7** shows a plurality of devices providing data to a surrogate generator according to some embodiments of the present invention.
Fig. **8** shows a generic multi-level stacked malware detector according to some embodiments of the present invention.
Fig. **9** shows an exemplary hardware configuration of a computer system programmed to perform some of the methods described herein.

### DETAILED DESCRIPTION OF PREFERRED EMBODIMENTS

In the following description, it is understood that all recited connections between structures can be direct operative connections or indirect operative connections through intermediary structures. A set of elements includes one or more elements. Any recitation of an element is understood to refer to at least one element. A plurality of elements includes at least two elements. Unless otherwise required, any described method steps need not be necessarily performed in a particular illustrated order. A first element (e.g. data) derived from a second element encompasses a first element equal to the second element, as well as a first element generated by processing the second element and optionally other data. Making a determination or decision according to a parameter encompasses making the determination or decision according to the parameter and optionally according to other data. Unless otherwise specified, an indicator of some quantity/data may be the quantity/data itself, or an indicator different from the quantity/data itself. A computer program is a sequence of processor instructions carrying out a task. Computer programs described in some embodiments of the present invention may be stand-alone software entities or sub-entities (e.g., subroutines, libraries) of other computer programs. The term 'database' is used herein to denote any organized collection of data. A hash is the numerical result of applying a hash function to a token (e.g., character string, code snippet, etc.). Hash functions map data of arbitrary size to fixed-size values. Exemplary hashing functions/procedures include, among others, cyclic redundancy check (CRC), checksums, message digest functions (e.g., MD5), and secure hash algorithms (SHA). Computer readable media encompass non-transitory media such as magnetic, optic, and semiconductor storage media (e.g. hard drives, optical disks, flash memory, DRAM), as well as communication links such as conductive cables and fiber optic links. According to some embodiments, the present invention provides, *inter alia,* computer systems comprising hardware (e.g. one or more processors) programmed to perform the methods described herein, as well as computer-readable media encoding instructions to perform the methods described herein.

The following description illustrates embodiments of the invention by way of example and not necessarily by way of limitation.

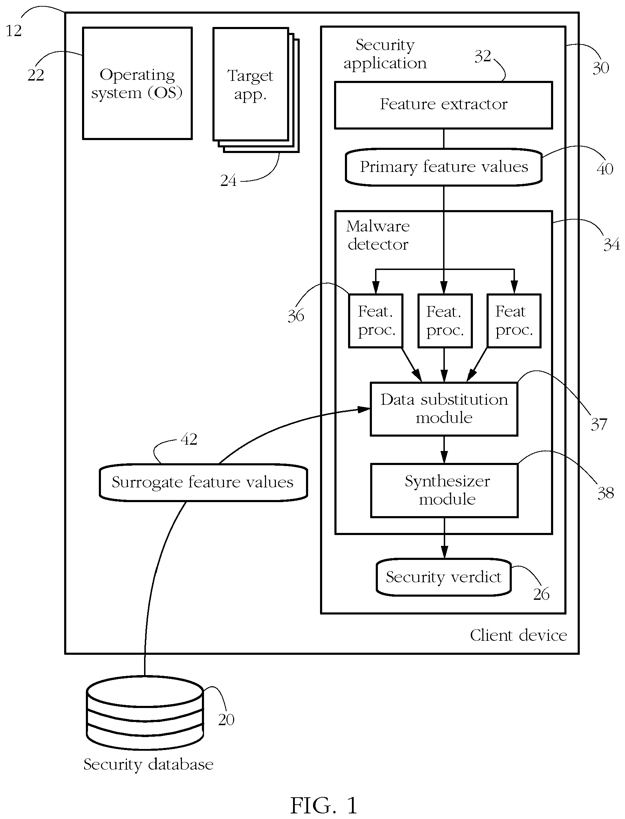

Fig. **1** shows an exemplary client device **12** protected against malware according to some embodiments of the present invention. Client device **12** generically represents any electronic device having a processor, a memory, and a communication interface enabling the respective device to communicate with other devices/computer systems. Exemplary client devices **12** include personal computers, mobile computing platforms (e.g., laptop computers, tablets, mobile telephones, and wearable devices such as smartwatches and fitness bands, among others), entertainment devices (e.g., TVs, game consoles), and household appliances (e.g., refrigerators, washing machines), among others.

In some embodiments, client device **12** executes a plurality of computer programs, such as an operating system (OS) **22** providing an interface between the hardware of client device **12** and other computer programs such as a set of target applications **24** executing on the respective client device. Exemplary operating systems include, among others, Windows^{®}, MacOS^{®}, iOS^{®}, and Android^{®}.

Target application(s) **24** generically represents any software such as word processing, image processing, spreadsheet, calendar, gaming, social media, web browser, and electronic communication applications, among others. The term 'application' herein denotes a standalone, executable piece of software distinct from the operating system, and which may be invoked by a user independently of other applications (as opposed to, for instance, a software library or a subroutine forming a part of another computer program). Exemplary applications **24** include smartphone apps downloaded from a store such as the App Store by Apple^{®}, Inc. or Google^{®} Play^{®}, or other third-party applications installed by the user (e.g. APK files directly downloaded by the user from the Internet and installed on client device **12**). The modifier 'target' is included merely for clarity, to indicate that application(s) **24** form(s) the object of a security analysis (malware detection) as described herein. For instance, a malware detector as described herein may be configured to determine whether target application **24** comprises malware.

In some embodiments, a security application **30** is configured to protect client device **12** and its user against computer security threats such as malicious software. For clarity, the following description will focus on embodiments wherein security application **30** comprises software executing on at least one hardware processor of client system **12.** However, a skilled artisan will understand that in alternative embodiments, the described functionality may be implemented in hardware (e.g., a dedicated integrated circuit forming part of device **12**) or in a combination of hardware and software. Security application **30** may form a part of a larger software suite which may provide various security services such as a traffic filter, virtual private networking (VPN), anti-spam, parental control, etc.

In some embodiments, security application **30** further includes a feature extractor **32** and a malware detector **34** communicatively coupled to feature extractor **32.** Feature extractor module **32** is configured to characterize various software entities executing on the respective client device (e.g., target apps **24**) by evaluating a set of features/attributes of such software. Features evaluated by extractor **32** are herein deemed 'primary' merely because they serve as input to a first stage of a stacked malware detector as described below. The modifier 'primary' is not meant to indicate a relative importance or relevance of some features with respect to others.

Primary features herein refer broadly to any attribute known in the art of computer security, that can be used to determine whether client device **12** comprises malicious software. Some such features may not be malware indicative *per se,* but may indicate malice when co-occurring with other features. Exemplary primary features include so-called 'static' features such as a current content of a section of memory, a content of a file or folder (e.g., an Android^{®} manifest file), a current OS setting, a content of an OS registry, a text displayed to a user, various features of an image displayed on a screen of client device **12,** etc. Other static features include an indicator of whether a memory of client system **12** currently stores a specific piece of code/sequence of instructions commonly known in the art as a malware signature. Other examples of primary features include behavioral or so-called 'dynamic' features indicating whether a particular software entity has performed a specific action, such as opening a file, changing an access permission, launching a child process, injecting code into another software entity, sending an electronic communication (e.g., an HTTP request for a remote resource), etc.

The operation of feature extractor **32** may include any methods and algorithms known in the art of computer security. Evaluating static features may include signature matching by way of hashing or other methods, accessing OS-specific data structures such as a Windows^{®} registry to read current values of various settings, etc. Evaluating dynamic features may include detecting an occurrence of a hardware or software event such as an application install, uninstall, and update, process/application launches and terminations, the spawning of child processes (e.g., forking), dynamic loading/unloading of a library, execution of a particular processor instruction (e.g., system call), file events such as file creation, write, deletion, etc., and setting various OS parameters (e.g., Windows^{®} registry events, permission/privilege changes), among others. Other exemplary detected events include a requests to access a peripheral device (e.g., hard disk, SD card, network adapter, microphone, camera), a request to access a remote resource (e.g., a hypertext transfer protocol - HTTP request to access a particular URL, an attempt to access a document repository over a local network), a request formulated in a particular uniform resource identifier scheme (e.g., a mailto: or a ftp: request), and an attempt to send an electronic message (e.g., email, short message service - SMS, etc.), among others. Yet other exemplary events comprise moving a user interface/window of target application **24** in and/or out of focus/foreground.

Some embodiments may further detect various timing-related events, such as periods of inactivity, i.e., time gaps between events and/or time intervals when the respective client device is idle, registers no user activity, or carries out only internal system tasks. Such inactive periods may be further differentiated into short time gaps (e.g., of the order of a seconds) and long time gaps (e.g., of the order of minutes to hours). Other timing-related events may include, for instance, a sequence of events occurring in quick succession/bursts of activity.

Other exemplary detected events may comprise receiving and/or displaying a particular type of content, such as a SMS including a hyperlink, an HTML document including a login form, a payment interface, an advertisement, etc.

Exemplary events specific to, or particularly relevant to the security of, mobile devices include screen toggles (on/off), a change in the label/name/icon of an application, and a screen grab. Other examples include a request to grant a specific type of permission (e.g., admin, accessibility), permissions requested dynamically (i.e., during various stages of execution, as opposed to at installation), and granting persistency (e.g., a foreground service started dynamically by the respective application). Yet other examples include an attempt to prevent an uninstall of the respective application and displaying an overlay on top of an OS settings interface (such an overlay may trick an unsuspecting user into granting the respective application unwanted permissions).

Event detection may be device-type-specific. In one example wherein client device **12** is a personal or laptop computer, upon detecting the launch of target application **24,** feature extractor **32** registers the respective application and/or its associated processes with an event logging service of OS **22** (e.g., event tracking for Windows^{®} - ETW, Syslog in UNIX^{®}). In response, extractor **32** may receive notifications of various events occurring during execution of the respective processes, either in real time or in log form. Event logging tools typically generate a list of event descriptors including a timestamp for each event, a numerical code identifying an event type, an indicator of a type of process or application that generated the respective event, and other event parameters. In such embodiments, extractor **32** may detect the occurrence of a target event by parsing the respective event log.

In another example of event detection, feature extractor **32** may modify a set of native functions of OS **22** by inserting redirecting instructions (also known as hooks or patches). In this manner, when a process executing on client device **12** calls the respective OS function, execution is redirected to a callback routine notifying extractor **32** of an attempt to execute the respective OS function. When the hooked function is instrumental in a monitored event (e.g., file creation, process launch, etc.), an attempt to call the respective function may serve as an indicator of the occurrence of the respective event.

In yet another example of event detection, electronic communications sent by the respective client device may be detected by installing a proxy module configured to intercept domain name service (DNS) queries and/or HTTP requests transmitted by the respective client device.

Some operating systems such as those executing on smartphones, wearables, etc., may not allow such manipulations. However, other tools may be available to detect the occurrence of various events. For instance, some OSs expose an application programming interface (API) that enables registering callbacks for different notifications, inspecting network traffic, SMS/MMS manipulation, detecting access to storage devices (e.g., SD card), etc. Some embodiments of feature extractor **32** use functions of an accessibility API to access on-screen content and detect user interactions with the respective device and/or applications. Some embodiments may further use artificial intelligence (e.g., natural language processing, computer vision, etc.) or other means of analyzing a content displayed on screen.

In some embodiments, feature extractor **32** produces a plurality of primary feature values **40,** i.e., current values of a plurality of features/attributes characterizing software executing on client device **12** (e.g., target application **24**). Such values may be numerical, strings, Boolean, etc., depending on the type of the respective feature. In typical embodiments, the count of primary features is relatively large, e.g., in the hundreds or thousands, but the present description applies in general to any number of primary features.

In some embodiments, security application **30** further includes a malware detector **34** receiving primary feature values **40** as input and determining a security verdict **26** according to feature values **40,** verdict **26** indicating whether client device **12** comprises malicious software. Exemplary verdicts **26** include a Boolean label (e.g., YES/NO) and a likelihood that the respective client is infected. Verdict **26** may further include an identifier of a software entity deemed malicious (e.g., target application **24**), an identifier of a malicious agent or type of malware, and a set of instructions for mitigating the effects of the respective infection.

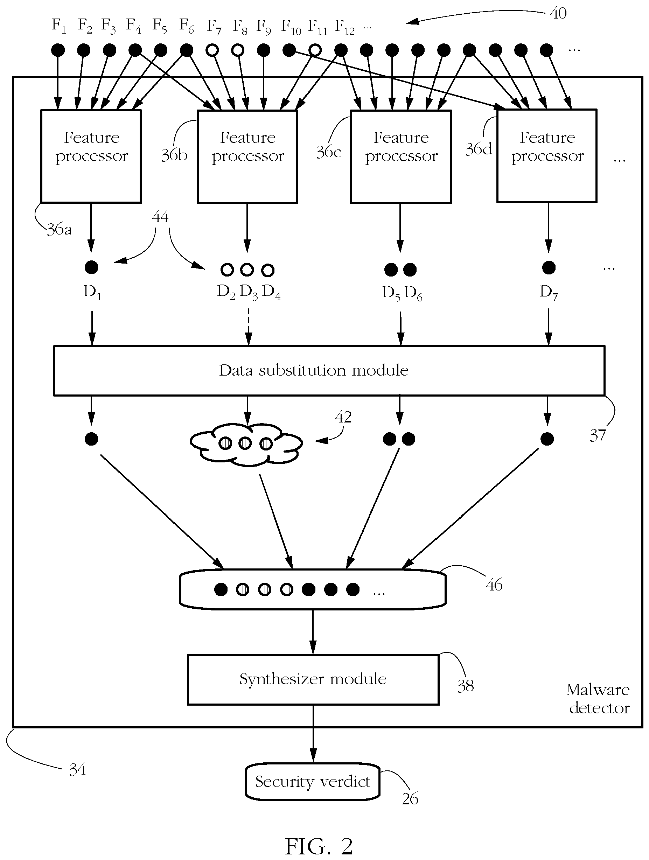

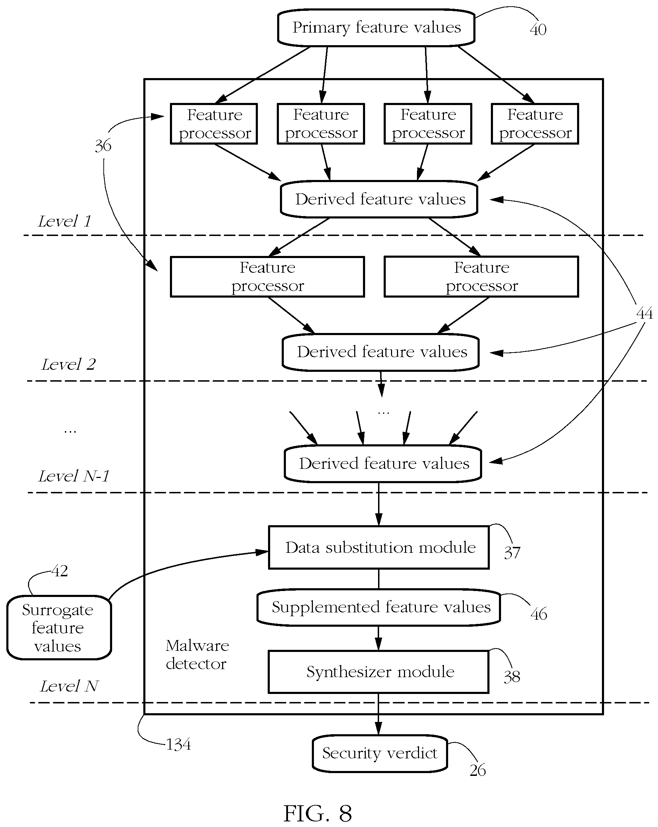

Fig. **2** illustrates an exemplary structure and operation of a malware detector **34** according to some embodiments of the present invention. Detector **34** has a stacked or cascade-like architecture, wherein a plurality of feature processors (FP) **36a-d** receive primary feature values **40** determined by feature extractor **32** and output a plurality of derived feature values **44** determined according to primary feature values **40.** The derived feature values then serve as input to a second-level synthesizer module **38** which in turn determines security verdict **26** according to derived feature values **44.** When some derived feature values **44** are missing (could not be determined for any reason), a data substitution module **37** fills in the missing values with surrogate data **42,** as detailed below. Although Fig. **2** shows just two levels of feature processing, a skilled artisan will know that the present description applies in general to a malware detector comprising a stack of feature processor levels, wherein each level receives the output of the previous level and feeds its own output to the next level of feature processors. For a description of such multi-level architectures, please see below in relation to Fig. **8****.**

In some embodiments, each primary feature processor **36a-d** inputs a specific subset of feature values **40,** i.e., values of a specific subset of features. Stated otherwise, each FP **36a-d** analyzes software executing on client device **12** through the perspective of a selected subset of features. In the example illustrated in Fig. **2****,** FP **36a** considers only primary features F₁ through F₆, while FP **36b** only processes primary features F₄, F₆, F₇ through F₉, F₁₁ and F₁₂. This aspect however is not meant to be limiting, for instance some FPs may input the whole range of features. The subsets of features analyzed by each FP **36a-d** may overlap as in the exemplary embodiment illustrated in Fig. **2****,** wherein both FPs **36a** and **36b** use features F₄ and F₆.

Each feature processor **36a-d** computes a specific set of derived feature values **44** according to its respective input. In the example of Fig. **2****,** FP **36a** determines derived feature D₁ according to current values of primary features F₁ through F₆. Derived features **44** may include any feature characterizing software executing on client device **12** (e.g., target application **24**). In one exemplary embodiment, each FP **36a-d** outputs a derived feature value indicating a probability that client device **12** comprises malware. In such examples, even though all feature processors **36a-d** output the same kind of information, i.e., a partial security verdict, each such partial verdict may be determined according to a distinct subset of primary features.

In some embodiments, each FP **36a-d** embodies a distinct malware-detecting algorithm, procedure, etc. Exemplary FPs **36a-d** may implement various malware-detection heuristics, such as signature matching and decision trees, among others. Other exemplary FPs **36a-d** may implement automated classifiers based on clustering algorithms (e.g., k-means, k-nearest neighbors, etc.), statistical techniques (e.g., Bayesian methods, etc.), support vector machines (SVMs), and/or Markov models. Some classes/clusters may be associated with benign behavior, while others may be associated with malware. In embodiments using artificial intelligence (AI) technologies, some FPs **36a-d** may comprise artificial neural networks (NN) pre-trained to determine whether a client device comprises malware according to a specific subset of features. Some such NNs may be trained to detect specific malware types (e.g., ransomware, malware that steals banking or credit card details, packed/encrypted malware, etc.).

Several NN architectures, as well as strategies for training NNs as malware detectors are known in the art. Simple FP examples include feed-forward networks trained to determine a malware-indicative label according to a subset of primary feature values. Another exemplary class of FPs, known as an autoencoder, can be trained to perform lossy compression and subsequent recovery of a subset of primary feature values. Some embodiments may train the autoencoder on data obtained during execution of benign software, and use a mismatch between the input and output of the autoencoder as an indicator of anomalous and therefore possibly malicious application behavior. Some FPs **36a-d** may employ neural networks specialized in text and natural language processing to analyze features extracted from Android^{®} manifest files and/or user interfaces. Such FPs may implement recurrent neural networks (RNN), long short term memory (LSTM) architectures, etc. Other exemplary FPs **36a-d** may employ NNs specialized in image processing (such as convolutional neural networks, among others) to analyze screen snapshots and/or image files received or sent out by the respective client device. Specific architectural and functional details of such NN-based feature processors go beyond the scope of the present description.

In yet another exemplary embodiment, some FPs **36a-d** may compute a projection of a subset of primary features into an abstract vector space, the projection commonly known as an embedding. Taking the illustrative example of Fig. **2****,** derived feature values D₂, D₃, and D₄ may be coordinates of a point in an abstract three-dimensional embedding space, the respective coordinates determined according to current values of primary features F₄, F₆, F₇, F₈, F₉, F₁₁ and F₁₂ by way of a specific mathematical transformation. The respective embedding space may be constructed via a machine learning procedure wherein parameters of the respective feature processor/neural network are tuned to satisfy pre-determined goals, such as minimizing a cost function determined according to an input and an output of the respective FP. An exemplary embedding space may be one in which all instances of malware are clustered together.

In some embodiments, synthesizer module **38** is configured to receive an input array **46** of derived feature values computed by feature processors **36a-d** and to determine security verdict **26** according to the respective derived feature values. Module **38** may implement any malware-detection or decision method known in the art. In a simple example wherein each derived feature value **44** indicates a partial verdict/likelihood of malice, module **38** may determine a consolidated security verdict as a weighted sum of individual derived feature values **44.** Each weight may reflect a specific degree of relevance of, or confidence in, each respective partial verdict. Another example of synthesizer module **38** implements a decision tree, wherein each node tests a condition according to a subset of derived feature values **44.** In more complex examples, synthesizer module **38** may include a set of pre-trained neural networks configured to map input array **46** to a malware-indicative label or a number indicating a likelihood that device **12** comprises malware. The architecture of such an AI module may depend on the type of input, i.e., on the type of features Dᵢ evaluated by feature processors upstream.

Not all primary feature values **40** may be available, for various reasons. For instance, evaluating some primary features may require specific OS settings or permissions, which may not be currently activated on the respective client device. Some primary feature values may not be computable at all times, in all geographical locations, on all carrier networks, etc. Evaluating some features may require a working Internet connection, which may be currently unavailable. Evaluating some primary features may require additional software which may not be installed on the respective device. Some primary features may be particularly expensive to evaluate and therefore some embodiments may postpone evaluation of such features for periods of relatively low user activity, for pre-determined time intervals, etc. In Fig. **2****,** primary feature values **40** which are available are represented as filled circles, while feature values currently unavailable are represented as empty circles. For instance, current values of features F₁ and F₉ are available, while features F₇ and F₁₁ could not be evaluated and therefore the respective feature values are missing.

In some embodiments, feature processors whose input is incomplete or unavailable do not execute or do not produce valid output. In the exemplary embodiment in Fig. **2****,** values of derived features D₂, D₃, and D₄ are not available because primary features F₇, F₈, and F₁₁ could not be evaluated. Similarly, the value of derived feature D₇ is missing because one of the primary feature values going into feature processor **36d** is currently not available. Some FPs may fail to execute for other reasons, for instance because of the occasional error, exception, or crash. In another example, the execution of some FPs (e.g., an FP that is particularly demanding on computing resources) may be suspended or postponed so as to not affect user experience. A missing/not available feature value may be programmatically represented using any method known in the art, for instance as NULL, N/A, NaN, a specific error code, etc.

In some embodiments, when some of the input of synthesizer module **38** is not available, data substitution module **37** replaces the missing derived feature values with surrogate values **42** within array **46.** Filling in the missing input thus ensures that synthesizer module **38** can execute and produce verdict **26** even when some individual feature processors are not functional. In such situations, synthesizer module **38** determines security verdict **26** according to the available derived feature values **44** and further according to surrogate feature values **42** supplied by module **37.**

Surrogate values **42** are represented as hatched circles in Fig. **2****.** The term 'surrogate' herein indicates that the respective value is not determined by the local instance of the respective feature processor according to locally computed primary feature values, but is instead supplied from an alternative source. In some embodiments, data substitution module **37** selectively retrieves surrogate values **42** from a repository illustrated as security database **20** in Fig. **1****.** Database **20** may reside on computer-readable media forming a part of, or communicatively coupled to, client device **12.** Alternatively, some embodiments may retrieve surrogate values from a remote security server, as further detailed below.

In some embodiments, surrogate values **42** are deliberately chosen to be representative for the current circumstances and/or state of client device **12.** Therefore, some embodiments of database **20** may store a multitude of reference values for each derived feature, each reference value associated with an identifier of the respective derived feature and further associated with a state indicator indicative of a state of a device that produced the respective reference value. Exemplary state indicators may include, among others, an indicator of a device type (e.g., smartphone of a specific make and model), an indicator of a type and version of an operating system, a timestamp indicating a moment in time when the respective value was computed, a location indicator (e.g., geolocation, network address, etc.), and a set of identifiers (e.g., integrity hashes) of software applications installed and/or executing at the time the respective feature value was computed. Other exemplary state indicators may include primary feature values used in determining the respective surrogate value. In one exemplary embodiment, database **20** stores a collection of records, each record comprising a reference value and a set of metadata indicative of a device state. Database **20** and individual records may use any format and data structure known in the art that enables selectively retrieving surrogate values **42** according to a device state. More details on computing and/or harvesting surrogate feature values are given below.

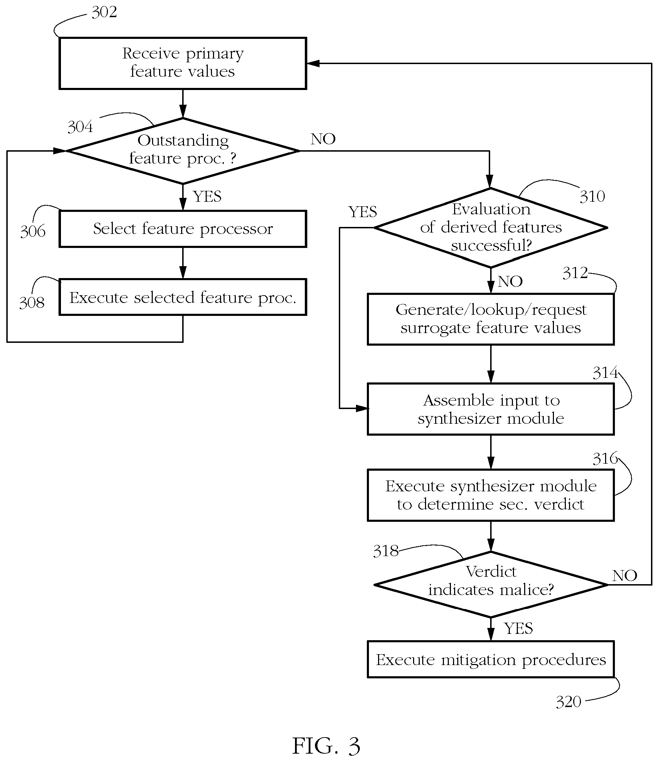

Fig. **3** shows an exemplary sequence of steps performed by malware detector **34** according to some embodiments of the present invention. In some embodiments, feature extractor **32** may continuously evaluate primary features. Alternatively, the operation of extractor **32** may be started by pre-determined trigger events, such as a launch of target application **24,** a suspicious or malware-indicative activity, or upon detecting a period of user inactivity, for instance. In yet other embodiments, feature extractor **32** may attempt to evaluate various primary features at pre-determined times, for instance according to a schedule or periodically. In any such case, malware detector **34** may receive a set of primary feature values **40** (a step **302**) from feature extractor **32.**

In response, detector **34** may attempt to execute feature processors **36a-d** to compute the respective derived feature values. In a sequence of steps **304-306-308,** all feature processors are selected and executed. When detector **34** comprises multiple layers of feature processors (see e.g., Fig. **8** and associated description below), all levels may be executed progressively, each feature processor receiving input from other feature processors upstream. In some embodiments, each feature processor may execute independently and asynchronously, for instance in a parallel computing configuration. For instance, client device **12** may maintain a pool of processor threads reserved for feature processing; in such embodiments, malware detector **34** may wait until a thread becomes available and assign the respective thread to an outstanding feature processor, which in turn will release the respective thread upon completing its job.

A step **310** may check whether the calculation of derived feature values **44** was successful, or stated otherwise, whether the output of the respective FP is available. The respective FP may fail to produce an output for instance because at least one of the primary feature values required as input to a respective feature processor is currently not available, or because the respective FP has crashed. In response to a failure to compute at least one derived feature value, in a step **312** data substitution module **37** may supply a surrogate value to replace the respective missing derived feature value. In various embodiments as described below, supplying a surrogate value may encompass locally generating, looking up, and/or requesting the respective value from a remote service.

In some embodiments, module **37** may be configured to generate a surrogate feature value according to prior knowledge about the respective derived feature. In one such example using a variant of Gaussian data regression, data previously harvested from client and/or test devices is used to compute various statistics such as typical bounds, a mean, and a standard deviation of each derived feature. The respective statistics may then be transmitted to each client device or instance of malware detector **34,** which may then generate surrogate values having the required statistics. The Gaussian distribution is herein given as an example and is not meant to be limiting. Some embodiments may fit the harvested data to other distributions (e.g., Student's distribution, multi-modal distributions, etc.). Other embodiments may use a clustering algorithms such as k-means to distribute data harvested from client and/or test devices into sets of clusters, wherein each cluster may be defined by a characteristic set of parameters such as a centroid and a radius. Such cluster parameters may be transmitted to each client device or instance of malware detector **34,** which may then determine surrogate data according to the respective cluster parameters. In one such example, module **37** may generate a random surrogate value according to whether the respective value is closer to a cluster's centroid than the respective cluster's radius. In another example, module **37** may select a cluster's centroid coordinates as surrogate values.

In some embodiments, step **312** may include formulating a query to database **20** and/or to a remote security server and receiving a surrogate feature value in response. The respective surrogate value(s) may be pre-computed according to previous observations and/or to data harvested from other client devices and/or test devices, as further described below.

In some embodiments, data substitution module **37** may look-up/request a surrogate value according to a current state of client device **12.** The device state may include, among others, an indicator of a device type, make, and model, an indicator of a type and version of OS **22,** identifiers of various software currently installed and/or executing on device **12** (e.g., identifiers of target apps **24**), etc. Other query criteria may include a current location (e.g. geolocation, network domain) of client device **12.** Alternatively or additionally, in step **312** module **37** may formulate a query/request according to current values of a subset of primary features, for instance at least some of the primary features used in computing the respective missing derived feature value. In one such example using the illustration in Fig. **2****,** a request for a surrogate value for derived feature D₂ may explicitly include or otherwise be formulated according to current values of primary features F₄, F₆, F₉, and F₁₂.

In some embodiments as described above, database **20** stores multiple records indexed according to device state and/or other criteria, which enables a selective retrieval of relevant surrogate feature values. Occasionally, a query may return multiple matching values for the respective type of feature. For instance, there may be multiple database records that partially match the device state parameters of the respective query. When multiple surrogate values are available for a selected derived feature, in step **312** module **37** may select one according to a pre-determined criterion. For instance, some embodiments may compute an average or a median of the available surrogate values, or may select the largest or smallest of the available surrogates.

In a step **314** (Fig. **3**), detector **34** may assemble an input for synthesizer module **38,** for instance an input array **46** as illustrated in Fig. **2****,** wherein array **46** consists of derived feature values **44** arranged in a pre-determined order and supplemented with surrogate data wherever the respective derived feature values are missing/could not be computed. In the example in Fig. **2****,** surrogate feature values **42** fill in for the missing values of derived features D₂, D₃, and D₄. In some embodiments, array **46** may further include other malware-indicative data, e.g., primary feature values, quantities computed according to derived feature values and possibly other data, etc.

A further step **316** may execute synthesizer module **38** to determine security verdict **26** according to input array **46.** When verdict **26** does not indicate the presence of malware, some embodiments of detector **34** return to step **302,** for instance to execute another cycle of malware detection calculations. Otherwise, in a step **320,** some embodiments may execute some malware mitigation procedures, such as notifying a user or administrator of the respective device, suspending execution of software suspected of malice (e.g., target app **24**), etc. An exemplary warning displayed to the user may include a hyperlink to an online description of the respective malware agent and instructions for recovering from its effects (e.g., instructions for removing the respective malicious application, changing various operating system settings, etc.).

Some embodiments may further transmit a report to a remote security server, for instance comprising indicators of a current device state of client device **12** and/or a set of primary and/or derived feature values that were used in calculating verdict **26.** Such reports may be analyzed and used to keep up with evolving threats and to develop new anti-malware tools and strategies.

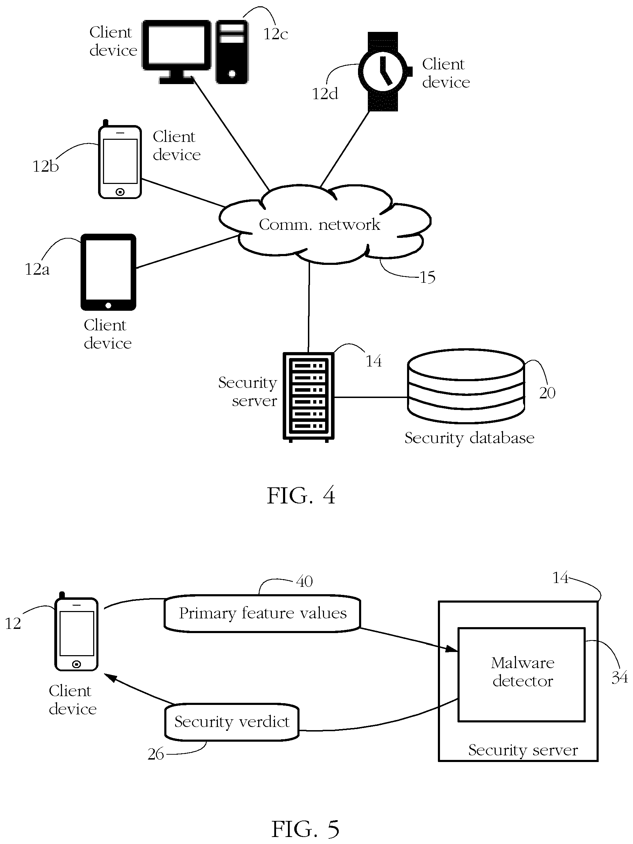

The embodiments described above mostly include 'self-sufficient' client devices that execute their own local instance of detector **34** and store an instance of security database **20** on local computer-readable media. However, a skilled artisan will know that such configurations are only exemplary and are not meant to be limiting. In alternative embodiments, detector **34** may execute on a remote server and may communicate with client device **12** via messages compliant with a client-server protocol. In one such example illustrated in Fig. **4****,** multiple client devices **12a-d** are connected to a communication network **15,** which may include a local area network (e.g., home network, corporate network, etc.), a wide-area network and/or the Internet. Network **15** generically represents a set of hardware (physical layer) and software interfaces enabling the transfer of data between devices **12a-d** and other entities connected to network **15.**

Fig. **4** further shows a security server **14** connected to communication network **15.** Server **14** generically represents a set of communicatively coupled computer systems, which may or may not be in physical proximity to each other. In some embodiments as further illustrated in Fig. **5****,** server **14** protects all client devices **12a-d** against malware by receiving primary feature values **40** from each client, executing malware detector **34** to compute a respective security verdict, and returning verdict **26** to the respective client.

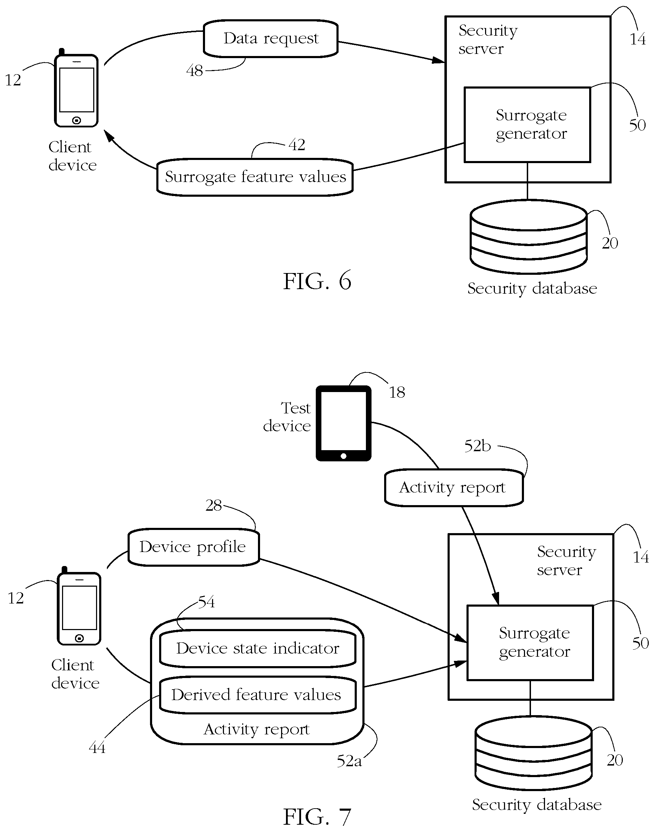

In yet another alternative embodiment illustrated in Fig. **6****,** instead of hosting a repository of surrogate feature values locally, client device **12** may request surrogates from security server **14.** In turn, server **14** may execute a surrogate generator **50** configured to maintain a centralized version of security database **20** comprising surrogate feature values indexed according to device state or other criteria as described above. Configurations as illustrated in Fig. **6** may be preferable to the one illustrated in Fig. **1** because they avoid transferring a content of database **20** to each protected client, and because a centralized system is typically quicker to respond to emerging threats. However, client-server communications required for operating in such configurations may substantially slow down the operation of client-side malware detectors **34.**

Fig. **6** further illustrates an exemplary exchange wherein client **12** transmits a data request **48** to server **14** and in response receives surrogate values **42.** Data request **48** may be formulated to enable a selective retrieval of surrogates, for instance according to feature type of the respective feature, according to a device type and/or to a current device state of the respective client, and/or according to other criteria such as a current location (geolocation, network domain, etc.) of the respective client. In some such embodiments, data request **48** may include device state data of client **12** and/or a set of primary feature values **40.**

In some embodiments, data request **48** may include a client identifier enabling server **14** to associate client **12** to a client-specific account or service agreement, which may indicate various client-specific security settings such as an acceptable rate of false positives, for instance. The respective client identifier may further be associated with device type data characterizing the respective client device **12,** such as a device type, make, and model, a type and version of OS **22,** a list of applications currently installed on device **12,** etc. Some embodiments of server **14** may then use such information to customize retrieval of surrogate data for the respective client device.

Fig. **7** illustrates an exemplary process of generating surrogate feature values according to some embodiments of the present invention. In one exemplary strategy, security server **14** may harvest derived feature values **44** computed remotely by protected client devices **12a-e,** to then use as surrogate values for delivery to requesting clients. To further enable an association between feature values **44** and device state, in some embodiments clients further pair a set of values **44** with a device state indicator **54** indicative of a device state under which values **44** were calculated. For instance, state indicator **54** may include a set of primary feature values **40** used in calculating derived feature values **44.** In one exemplary embodiment as illustrated in Fig. **6****,** state indicator **54** and feature values **44** are bundled together in an activity report **52a,** which may be transmitted by client device **12** according to a schedule or in response to a malware-detection procedure as described above in relation to Fig. **3****.**

Server **14** may further receive a device profile **28** from each client, including a client identifier and a set of data characterizing a hardware and/or software configuration of the respective client (e.g., device type, make, model, OS version, various current settings, etc.). Server **14** may then use such information in associating harvested feature values **44** with a specific device type and/or configuration.

Alternatively or additionally, some embodiments employ a set of test devices **18** to compute derived feature values **44** in various hardware and software configurations. In some embodiments, test device **18** comprises an instance of a mobile computing device such as a smartphone or a tablet computer, device **18** acting as a substitute for a protected client. One example of test device **18** consists of a physical appliance, e.g., a mobile phone of a specific make and model, having a specific hardware and/or software configuration and communicatively coupled to security server **14.** Another example of test device **18** comprises an emulation of a physical device, i.e., a set of software modules that reproduce the behavior of a real, physical appliance such as a smartphone. In one such example, various software components of test device **18** execute in a sandbox (isolated container). In other exemplary embodiments, test device **18** may include a virtual machine or comprising an abstraction/virtualization of a respective client device, the virtual machine capable of executing an operating system, a set of target applications and a security application as described above in relation to Fig. **1****.** Some test devices **18** may operate as a web service, e.g., as part of a device farm. Several such services are available commercially.

In some such embodiments, server **14** may remotely configure test device **18** with specific hardware and software characteristics and may remotely trigger an execution of a malware detector on the respective device. Some such tests may explore the behavior of test device **18** when executing various target applications, some benign, some known to be malicious. As a result of the respective execution, server **14** may harvest a set of derived feature values computed by test device **18,** for instance in the form of an activity report **52b** further including associated device state and/or other data. Some embodiments may then index, annotate, and store collected derived feature data in security database **20,** to be further transmitted as surrogate values **42** to requesting clients.

Database **20** may be formatted and stored according to any standard known in the art. Exemplary database formats include a relational database, an extensible markup language (XML) document, a spreadsheet, and a key-value store, among others. Server **14** and/or client devices may be configured to selectively retrieve and/or insert data into database **20,** for instance using structured queries.

By collecting a large volume of data from protected clients and/or test devices, server **14** may further determine reliable statistics of each derived feature Dᵢ, for instance typical values and/or typical ranges of each feature. Server **14** may fit various types of statistical distributions (e.g., Gaussian regression) to the collected data and thus determine other statistical characteristics such as a mean value, standard deviation, expectation values, etc. Such data may then be used by some embodiments of malware detector **34** to generate surrogate values **42** with similar characteristics on demand.

The exemplary malware detector **34** illustrated in Fig. **2** comprises just two layers, wherein a first layer of feature processors **36a-d** feeds into a second layer consisting of synthesizer module **38.** However, a skilled artisan will know that the systems and methods described above can be adapted to a stacked malware detector having more than two layers. Fig. **8** shows an exemplary malware detector **134** according to some embodiments of the present invention, detector **134** consisting of a stack/cascade of *N* layers, each layer *i* comprising a set of feature processors **36** that take input from the layer *i*-1 upstream and compute a set of derived feature values **44** according to the respective input. The respective derived feature values are then passed as input to the next layer (*i*+1) of feature processors **36.** The type and count of feature processors **36** may vary among layers, as illustrated. In one exemplary embodiment, each feature processor **36** comprises a separate pre-trained artificial neural network. Feature processors in layer 1 take primary feature values **40** as input. At the other end of the cascade, the output of layer *N*-1 is fed as input to synthesizer module **38,** which in turn outputs security verdict **26.**

When some of primary feature values **40** are missing, some feature processors **36** that depend on the respective input cannot execute and therefore, some derived feature values **44** may be missing as well. In such cases, data substitution module **37** fills in the missing derived feature values with surrogate values **42,** to produce a complete input array **46** for synthesized module **38.** Such supplementation with surrogates may be done at any level of the cascade from 1 to *N*-1. However, preferred embodiments as illustrated in Fig. **8** supply surrogate values **42** only to the output of the *N*-1 layer.

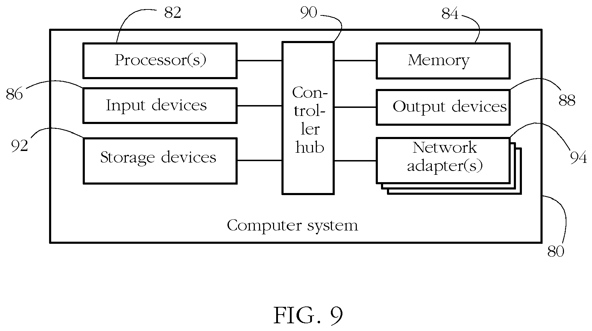

The description above shows various methods and algorithms which may be embodied as computer programs executed by a general-purpose hardware processor, but a skilled artisan will understand that the respective functionality may also be implemented using dedicated hardware components, such as an application-specific integrated circuit (ASIC) or field-programmable gate array (FPGA), or using a combination of hardware and software. Fig. **9** illustrates an exemplary hardware configuration of a computer system **80** programmable to carry some of the methods and algorithms described herein. The illustrated configuration is generic and may represent any of client devices **12a-d** and/or security server **14.** An artisan will know that the hardware configuration of some types of devices (e.g., mobile telephones, smartwatches, servers, routers) may differ somewhat from the one illustrated in Fig. **9****.**

The illustrated computer system comprises a set of physical devices, including a hardware processor **82** and a memory unit **84.** Processor **82** comprises a physical device (e.g., a microprocessor, a multi-core integrated circuit formed on a semiconductor substrate, etc.) configured to execute computational and/or logical operations with a set of signals and/or data. In some embodiments, such operations are specified to processor **82** in the form of a sequence of processor instructions (e.g., machine code) encoding an algorithm for carrying out some of the methods described herein. Memory unit **84** may comprise volatile computer-readable media (e.g., DRAM, SRAM) storing instructions and/or data accessed or generated by processor **82.**

Input devices **86** may include computer keyboards, mice, and microphones, among others, including the respective hardware interfaces and/or adapters allowing a user to introduce data and/or instructions into the respective computer system. Output devices **88** may include display devices such as monitors and speakers among others, as well as hardware interfaces/adapters such as graphic cards, allowing the illustrated computing appliance to communicate data to a user. In some embodiments, input devices **86** and output devices **88** share a common piece of hardware, as in the case of touch-screen devices. Storage devices **92** include computer-readable media enabling the non-volatile storage, reading, and writing of software instructions and/or data. Exemplary storage devices **92** include magnetic and optical disks and flash memory devices, as well as removable media such as CD and/or DVD disks and drives. The set of network adapters **94,** together with associated communication interface(s), enable the illustrated computer system to connect to communication network **15** (Fig. **4**) and/or to other devices/computer systems. Controller hub **90** generically represents the plurality of system, peripheral, and/or chipset buses, and/or all other circuitry enabling the communication between processor **82** and devices **84, 86, 88, 92,** and **94.** For instance, controller hub **90** may include a memory controller, an input/output (I/O) controller, and an interrupt controller, among others. In another example, controller hub **90** may comprise a northbridge connecting processor **82** to memory **84,** and/or a southbridge connecting processor **82** to devices **86, 88, 92,** and **94.**

The exemplary systems and methods described above enable protecting electronic devices and their users against malicious software. Some of the described methods and systems are particularly suited to mobile computing devices such as smartphones, tablet computers, and wearable computers, among others. Such mobile devices typically have substantially less computing power, memory, and storage than other computer systems such as personal computers and servers, and therefore may present specific challenges to the conventional computer security paradigm.

Some conventional anti-malware software analyzes the code (e.g., memory image) of a program, looking for patterns or snippets that are known to be malicious. Other conventional anti-malware methods include monitoring the behavior of software by detecting the occurrence of selected events and applying a set of rules and/or calculations to the detected events to determine whether the respective device is infected. Recent developments in machine learning have enabled an effective analysis of data using artificial neural networks. In typical examples of such technologies, a set of neural networks is configured to analyze an array of features characterizing the target software and determine whether the respective software is malicious. The neural networks are pre-trained on a corpus including known malicious as well as benign samples. In some cases, the number of input features may be very large (several hundred to thousands of distinct features, including static and behavioral features as described above).

However, evaluating such features may not be technically straightforward, especially on mobile computing devices such as smartphones and other wearable computing devices. Computations required for both inspecting the memory and observing the behavior of an application may consume substantial resources and thus negatively impact user experience. Some event-detection methods such as hooking various OS functions may not be available on all operating systems and device types. Furthermore, evaluating some features may necessitate particular OS settings, for instance specific permissions which may not be granted on all devices. Some features may not be available at all times or in all locations. Therefore, applying some conventional anti-malware methods described above on mobile computing platforms may be impractical.

Some embodiments of the present invention explicitly address such shortcomings, thereby enhancing the security of mobile computing devices. In some embodiments, a feature extractor attempts to evaluate a plurality of features characterizing the hardware and software of a client device. A set of resulting primary feature values are then fed to a plurality of feature processors, arranged in a multi-level cascade wherein each level receives input from the next level upstream, and in turn provides input to a next level downstream (see exemplary architectures in Figs. **2** and **8**). At the last level of the stack of feature processors, a synthesizer module outputs a security verdict indicative of whether the respective client device comprises malicious software.

In some embodiments, each feature processor comprises a set of pre-trained neural networks configured to input a subset of derived feature values available at the respective level of the cascade. In a simple example constructed as illustrated in Fig. **2****,** each feature processor may comprise a neural network configured to determine whether the respective client comprises malware according to a distinct subset of primary feature values. Stated otherwise, each feature processor may assess the target software from a distinct 'viewpoint', i.e., according to distinct criteria, and produce a distinct verdict. To use an analogy from image processing, each feature processor may analyze a distinct aspect of an image (i.e., a set of primary feature values) to determine whether the respective image shows a particular object (e.g., a bicycle): one feature processor may consider edge information, while another may consider image segmentation data. The independent assessments may then be brought together by the synthesizer module, thus producing a unified assessment of the primary feature data.

Some conventional malware detectors feed the whole set of primary feature values to a single neural network. In contrast, some embodiments of the present invention divide the input among multiple, smaller feature processors/neural networks as described above. The advantages of such division are at least twofold. First, the computational cost of training and running neural networks typically scales with the square of the size of the input, and therefore smaller networks may be substantially cheaper to train and use than large ones. This may be especially true for anti-malware activities, wherein successful detection may require analyzing hundreds or thousands of distinct input parameters.

Second, some primary feature values may not always be available, for any of the reasons outlined above. Architectures which rely on a single neural network configured to consider all features of the input data may thus fail whenever at least one of the required features is missing. In contrast, dividing the input data among multiple smaller feature processors/networks as described herein allows executing at least those feature processors whose input is available.

Some embodiments of the present invention further supply surrogate data to fill in for missing feature values. However, instead of replacing any missing primary feature values, in some embodiments surrogate data is used to replace derived feature values which could not be computed because of the missing primary feature values. Stated otherwise, in some embodiments of the present invention, supplementation with surrogates is done at intermediate levels of the feature processor cascade. In preferred embodiments, surrogate feature values are provided as input to the synthesizer module (see e.g., Figs. **1** and **8**), to ensure that the respective module can always execute.

This choice is deliberate and has substantial advantages over other strategies of mitigating missing input. Some embodiments rely on the observation that feature processors such as neural networks provide an important dimensionality reduction. Stated otherwise, the size of the output of typical feature processors may be orders of magnitude smaller than the size of their input. In the exemplary embodiment illustrated in Fig. **2****,** feature processor **36a** inputs six primary feature values and outputs just one derived feature value D₁. This means that the count of derived feature values **44** is generally expected to decrease down a cascade of stacked feature processors as illustrated in Fig. **8****.** The typical input to synthesizer module **38** may be 20-30 elements long, while the size of primary feature vector **40** may be in the hundreds or thousands.

Therefore, solving a missing input problem according to some embodiments of the present invention may only require supplying a modest number of surrogate feature values **42.** In contrast, solving the problem at the primary feature level may require supplying a much larger number of missing values, some of which may be difficult or impractical to determine. Furthermore, supplying surrogates at an intermediate or final level (as opposed to a primary level) of the feature processor stack/cascade removes the computational burden of actually executing the feature processors that normally compute the feature values that are now supplied as surrogates.

Some embodiments further rely on the observation that derived feature values **44** (i.e., feature values determined at intermediate levels of the FP stack/cascade) typically have substantially less variability than primary feature values **40.** This follows from a generic tendency of neural networks to infer and generalize. In one exemplary embodiment, one feature processor **36** may be trained to analyze a webpage currently displayed on a screen of client device **12,** to determine whether the respective webpage is an e-banking interface. Since the look and functionality of such interfaces varies substantially from one banking institution to another, there is substantially more variability in the input than in the output of the respective FP. Providing surrogate input at primary feature level would require generating a surrogate webpage/HTML document, which is substantially more computationally costly than providing surrogate output (i.e., banking or no banking).

Some embodiments use as surrogates reference values of each derived feature, said reference values determined by other protected client devices and/or by test devices having similar hardware and/or software configurations as the client executing the respective instance of malware detector. Such reference values may be centrally harvested by a security server computer system and provided on demand to requesting clients. Other embodiments use such data harvested from clients and/or test devices to determine various statistics (mean, standard deviation, etc.) of each derived feature, and then generate random surrogate data according to the determined statistics.

It will be clear to one skilled in the art that the above embodiments may be altered in many ways without departing from the scope of the invention. Accordingly, the scope of the invention should be determined by the following claims.

## Claims

1. A malware detection method comprising employing at least one hardware processor of a computer system to:
determine (302) a plurality of primary feature values characterizing a software entity executing on the computer system;
execute (306,308) a plurality of feature processors to determine a plurality of derived feature values according to the plurality of primary feature values, wherein a selected feature processor of the plurality of feature processors is configured to determine a selected derived feature value according to a selected subset of the plurality of primary feature values;
in response to a failure to determine the selected derived feature value, supply (312) a surrogate value to replace the missing selected derived feature value; and
determine (316) whether the software entity is malicious according to the plurality of derived feature values and further according to the surrogate value.

2. The method of claim 1, wherein supplying the surrogate value comprises employing the at least one hardware processor to calculate the surrogate value according to a reference value determined by another feature processor executing on a device distinct from the computer system.

3. The method of claim 2, wherein supplying the surrogate value comprises calculating the surrogate value according to a statistic of a plurality of reference values, the plurality of reference values determined by other feature processors executing on devices distinct from the computer system.

4. The method of claim 1, wherein supplying the surrogate value comprises selectively retrieving the surrogate value from a database storing a plurality of reference values determined by other feature processors executing on devices distinct from the computer system.

5. The method of claim 4, comprising selecting the surrogate value from the plurality of reference values according to a current state of the computer system.

6. The method of claim 4, comprising selecting the surrogate value from the plurality of reference values according to a device type of the computer system.

7. The method of claim 1, wherein supplying the surrogate value comprises:
employing the at least one hardware processor of the computer system to transmit a data request to a remote security server, the data request formulated according to an indicator of a current state of the computer system; and
in response to transmitting the data request, receiving the surrogate value from the remote security server.

8. The method of claim 7, wherein the data request includes at least one value of the plurality of primary feature values.

9. The method of claim 1, wherein each feature processor of the plurality of feature processors comprises a neural network trained to determine a likelihood that the software entity is malicious according to a respective subset of the plurality of primary feature values.

10. A computer system having at least one hardware processor configured to execute:
a feature extractor configured to determine a plurality of primary feature values characterizing a software entity executing on the computer system;
a plurality of feature processors configured to determine a plurality of derived feature
values according to the plurality of primary feature values, wherein a selected feature processor of the plurality of feature processors is configured to determine a selected derived feature value according to a selected subset of the plurality of primary feature values;
a data substitution module connected to the plurality of feature processors and configured to, in response to a failure to determine the selected feature value supply a surrogate value to replace the missing selected derived feature value; and
a synthesizer module configured to determine whether the software entity is malicious according to the plurality of derived feature values and further according to the surrogate value.

11. The computer system of claim 10, wherein supplying the surrogate value comprises employing the at least one hardware processor to calculate the surrogate value according to a reference value determined by another feature processor executing on a device distinct from the computer system.

12. The computer system of claim 11, wherein supplying the surrogate value comprises calculating the surrogate value according to a statistic of a plurality of reference values, the plurality of reference values determined by other feature processors executing on devices distinct from the computer system.

13. The computer system of claim 10, wherein supplying the surrogate value comprises selectively retrieving the surrogate value from a database storing a plurality of reference values determined by other feature processors executing on devices distinct from the computer system.

14. The computer system of claim 13, wherein the data substitution module is configured to select the surrogate value from the plurality of reference values according to a current state of the computer system.

15. The computer system of claim 13, wherein the data substitution module is configured to select the surrogate value from the plurality of reference values according to a device type of the computer system.

16. The computer system of claim 10, wherein supplying the surrogate value comprises:
transmitting a data request to a remote security server, the data request formulated according to an indicator of a current state of the computer system; and
in response to transmitting the data request, receiving the surrogate value from the remote security server.

17. The computer system of claim 16, wherein the data request includes at least one value of the plurality of primary feature values.

18. The computer system of claim 10, wherein each feature processor of the plurality of feature processors comprises a neural network trained to determine a likelihood that the software entity is malicious according to a respective subset of the plurality of primary feature values.

19. A non-transitory computer-readable medium storing instructions which, when executed by at least one hardware processor of a computer system, cause the computer system to perform malware detection comprising:
determining a plurality of primary feature values characterizing a software entity executing on the computer system;
executing a plurality of feature processors to determine a plurality of derived feature values according to a plurality of primary feature values, wherein a selected feature processor of the plurality of feature processors is configured to determine a selected derived feature value according to a selected subset of the plurality of primary feature values;
in response to a failure to determine the selected derived feature value, supplying a surrogate value to replace the missing selected derived feature value; and
determining whether the software entity is malicious according to the plurality of derived feature values and further according to the surrogate value.

## Patentansprüche

1. Ein Verfahren zur Erkennung von Schadsoftware, bei dem mindestens ein Hardwareprozessor eines Computersystems verwendet wird, um:
(302) eine Vielzahl von primären Merkmalswerten bestimmen, die eine auf dem Computersystem ausgeführte Softwareeinheit charakterisieren;
(306,308) eine Vielzahl von Merkmalsprozessoren ausführen, um eine Vielzahl von abgeleiteten Merkmalswerten gemäß der Vielzahl von primären Merkmalswerten zu bestimmen, wobei ein ausgewählter Merkmalsprozessor der Vielzahl von Merkmalsprozessoren so konfiguriert ist, dass er einen ausgewählten abgeleiteten Merkmalswert gemäß einer ausgewählten Teilmenge der Vielzahl von primären Merkmalswerten bestimmt;
Falls der ausgewählte abgeleitete Merkmalswert nicht ermittelt werden kann, liefern Sie (312) einen Ersatzwert, der den fehlenden ausgewählten abgeleiteten Merkmalswert ersetzt; und
(316) festzustellen, ob die Softwareeinheit bösartig ist, und zwar anhand der Vielzahl abgeleiteter Merkmalswerte und ferner anhand des Ersatzwertes.

2. Das Verfahren nach Anspruch 1, wobei die Bereitstellung des Ersatzwertes das Verwenden des mindestens einen Hardwareprozessors zur Berechnung des Ersatzwertes nach einem Referenzwert umfasst, der von einem anderen Merkmalsprozessor ermittelt wird, der auf einem vom Computersystem getrennten Gerät ausgeführt wird.

3. Das Verfahren nach Anspruch 2, wobei die Bereitstellung des Ersatzwertes die Berechnung des Ersatzwertes nach einer Statistik einer Vielzahl von Referenzwerten umfasst, wobei die Vielzahl von Referenzwerten von anderen Merkmalsprozessoren bestimmt wird, die auf vom Computersystem verschiedenen Geräten ausgeführt werden.

4. Das Verfahren nach Anspruch 1, wobei die Bereitstellung des Ersatzwertes das selektive Abrufen des Ersatzwertes aus einer Datenbank umfasst, die eine Vielzahl von Referenzwerten speichert, die von anderen Merkmalsprozessoren auf Geräten, die vom Computersystem getrennt sind, bestimmt werden.

5. Das Verfahren nach Anspruch 4, umfassend die Auswahl des Ersatzwertes aus der Vielzahl von Referenzwerten entsprechend dem aktuellen Zustand des Computersystems.

6. Das Verfahren nach Anspruch 4, umfassend die Auswahl des Ersatzwertes aus der Vielzahl von Referenzwerten entsprechend dem Gerätetyp des Computersystems.

7. Verfahren nach Anspruch 1, wobei die Bereitstellung des Ersatzwertes Folgendes umfasst:
unter Verwendung mindestens eines Hardwareprozessors des Computersystems zur Übermittlung einer Datenanforderung an einen entfernten Sicherheitsserver, wobei die Datenanforderung gemäß einem Indikator für den aktuellen Zustand des Computersystems formuliert ist; und
Als Antwort auf die Übermittlung der Datenanforderung wird der Ersatzwert vom entfernten Sicherheitsserver empfangen.

8. Verfahren nach Anspruch 7, wobei die Datenanforderung mindestens einen Wert aus der Vielzahl der primären Merkmalswerte enthält.

9. Verfahren nach Anspruch 1, wobei jeder Merkmalsprozessor der Vielzahl von Merkmalsprozessoren ein neuronales Netzwerk umfasst, das darauf trainiert ist, die Wahrscheinlichkeit zu bestimmen, dass die Softwareeinheit bösartig ist, und zwar anhand einer jeweiligen Teilmenge der Vielzahl von primären Merkmalswerten.

10. Ein Computersystem mit mindestens einem Hardwareprozessor, der zur Ausführung folgender Befehle konfiguriert ist:
ein Merkmalsextraktor, der so konfiguriert ist, dass er eine Vielzahl primärer Merkmalswerte ermittelt, die eine auf dem Computersystem ausgeführte Softwareeinheit charakterisieren;
eine Vielzahl von Merkmalsprozessoren, die so konfiguriert sind, dass sie eine Vielzahl abgeleiteter Merkmalswerte gemäß der Vielzahl primärer Merkmalswerte bestimmen, wobei ein ausgewählter Merkmalsprozessor der Vielzahl von Merkmalsprozessoren so konfiguriert ist, dass er einen ausgewählten abgeleiteten Merkmalswert gemäß einer ausgewählten Teilmenge der Vielzahl primärer Merkmalswerte bestimmt;
ein Datensubstitutionsmodul, das mit den mehreren Merkmalsprozessoren verbunden und so konfiguriert ist, dass es im Falle eines Fehlers bei der Ermittlung des ausgewählten Merkmalswerts einen Ersatzwert liefert, der den fehlenden abgeleiteten Merkmalswert ersetzt; und
ein Synthesizermodul, das so konfiguriert ist, dass es anhand der Vielzahl abgeleiteter Merkmalswerte und ferner anhand des Ersatzwertes bestimmt, ob die Softwareeinheit bösartig ist.

11. Das Computersystem nach Anspruch 10, wobei die Bereitstellung des Ersatzwertes darin besteht, dass der mindestens eine Hardwareprozessor den Ersatzwert anhand eines Referenzwertes berechnet, der von einem anderen Merkmalsprozessor bestimmt wird, der auf einem vom Computersystem getrennten Gerät ausgeführt wird.

12. Das Computersystem nach Anspruch 11, wobei die Bereitstellung des Ersatzwertes die Berechnung des Ersatzwertes nach einer Statistik einer Vielzahl von Referenzwerten umfasst, wobei die Vielzahl von Referenzwerten von anderen Merkmalsprozessoren bestimmt wird, die auf vom Computersystem verschiedenen Geräten ausgeführt werden.

13. Das Computersystem nach Anspruch 10, wobei die Bereitstellung des Ersatzwertes das selektive Abrufen des Ersatzwertes aus einer Datenbank umfasst, die eine Vielzahl von Referenzwerten speichert, die von anderen Merkmalsprozessoren auf vom Computersystem verschiedenen Geräten bestimmt werden.

14. Das Computersystem nach Anspruch 13, wobei das Datensubstitutionsmodul so konfiguriert ist, dass es den Ersatzwert aus der Vielzahl von Referenzwerten entsprechend dem aktuellen Zustand des Computersystems auswählt.

15. Das Computersystem nach Anspruch 13, wobei das Datensubstitutionsmodul so konfiguriert ist, dass es den Ersatzwert aus der Vielzahl von Referenzwerten entsprechend einem Gerätetyp des Computersystems auswählt.

16. Das Computersystem nach Anspruch 10, wobei die Bereitstellung des Ersatzwertes Folgendes umfasst:
Übermittlung einer Datenanfrage an einen entfernten Sicherheitsserver, wobei die Datenanfrage gemäß einem Indikator für den aktuellen Zustand des Computersystems formuliert ist; und
Als Antwort auf die Übermittlung der Datenanforderung wird der Ersatzwert vom entfernten Sicherheitsserver empfangen.

17. Das Computersystem nach Anspruch 16, wobei die Datenanforderung mindestens einen Wert aus der Vielzahl der primären Merkmalswerte enthält.

18. Das Computersystem nach Anspruch 10, wobei jeder Merkmalsprozessor der Vielzahl von Merkmalsprozessoren ein neuronales Netzwerk umfasst, das darauf trainiert ist, die Wahrscheinlichkeit zu bestimmen, dass die Softwareeinheit bösartig ist, und zwar anhand einer jeweiligen Teilmenge der Vielzahl von primären Merkmalswerten.

19. Ein nichtflüchtiges, computerlesbares Medium, das Anweisungen speichert, die, wenn sie von mindestens einem Hardwareprozessor eines Computersystems ausgeführt werden, das Computersystem veranlassen, eine Malware-Erkennung durchzuführen, umfassend:
Ermittlung einer Vielzahl primärer Merkmalswerte, die eine auf dem Computersystem ausgeführte Softwareeinheit charakterisieren;
Ausführen einer Vielzahl von Merkmalsprozessoren zur Bestimmung einer Vielzahl abgeleiteter Merkmalswerte gemäß einer Vielzahl primärer Merkmalswerte, wobei ein ausgewählter Merkmalsprozessor der Vielzahl von Merkmalsprozessoren so konfiguriert ist, dass er einen ausgewählten abgeleiteten Merkmalswert gemäß einer ausgewählten Teilmenge der Vielzahl primärer Merkmalswerte bestimmt;
Falls der ausgewählte abgeleitete Merkmalswert nicht ermittelt werden kann, wird ein Ersatzwert bereitgestellt, der den fehlenden ausgewählten abgeleiteten Merkmalswert ersetzt; und
Feststellung, ob die Softwareeinheit bösartig ist, anhand der Vielzahl abgeleiteter Merkmalswerte und ferner anhand des Ersatzwertes.

## Revendications

1. Une méthode de détection de logiciels malveillants comprenant l'utilisation d'au moins un processeur matériel d'un système informatique pour :
déterminer (302) une pluralité de valeurs de caractéristiques primaires caractérisant une entité logicielle s'exécutant sur le système informatique ;
exécuter (306,308) une pluralité de processeurs de caractéristiques pour déterminer une pluralité de valeurs de caractéristiques dérivées selon la pluralité de valeurs de caractéristiques primaires, dans lequel un processeur de caractéristiques sélectionné de la pluralité de processeurs de caractéristiques est configuré pour déterminer une valeur de caractéristique dérivée sélectionnée selon un sous-ensemble sélectionné de la pluralité de valeurs de caractéristiques primaires ;
En cas d'impossibilité de déterminer la valeur de la caractéristique dérivée sélectionnée, fournir (312) une valeur de substitution pour remplacer la valeur manquante de la caractéristique dérivée sélectionnée ; et
déterminer (316) si l'entité logicielle est malveillante selon la pluralité des valeurs de caractéristiques dérivées et en outre selon la valeur de substitution.

2. La méthode selon la revendication 1, dans lequel la fourniture de la valeur de substitution comprend l'utilisation d'au moins un processeur matériel pour calculer la valeur de substitution selon une valeur de référence déterminée par un autre processeur de fonctionnalités s'exécutant sur un dispositif distinct du système informatique.

3. La méthode selon la revendication 2, dans lequel la fourniture de la valeur de substitution comprend le calcul de la valeur de substitution selon une statistique d'une pluralité de valeurs de référence, la pluralité de valeurs de référence étant déterminée par d'autres processeurs de fonctionnalités s'exécutant sur des dispositifs distincts du système informatique.

4. La méthode selon la revendication 1, dans lequel la fourniture de la valeur de substitution comprend la récupération sélective de la valeur de substitution à partir d'une base de données stockant une pluralité de valeurs de référence déterminées par d'autres processeurs de fonctionnalités s'exécutant sur des dispositifs distincts du système informatique.

5. La méthode selon la revendication 4, comprenant la sélection de la valeur de substitution parmi la pluralité de valeurs de référence en fonction de l'état actuel du système informatique.

6. La méthode selon la revendication 4, comprenant la sélection de la valeur de substitution parmi la pluralité de valeurs de référence en fonction du type de dispositif du système informatique.

7. La méthode selon la revendication 1, dans lequel la fourniture de la valeur de substitution comprend :
utilisant au moins un processeur matériel du système informatique pour transmettre une requête de données à un serveur de sécurité distant, la requête de données étant formulée selon un indicateur de l'état actuel du système informatique ; et
en réponse à la transmission de la requête de données, réception de la valeur de substitution du serveur de sécurité distant.

8. La méthode selon la revendication 7, dans lequel la demande de données comprend au moins une valeur parmi la pluralité de valeurs de caractéristiques principales.

9. La méthode selon la revendication 1, dans lequel chaque processeur de caractéristiques de la pluralité de processeurs de caractéristiques comprend un réseau neuronal entraîné à déterminer une probabilité que l'entité logicielle soit malveillante selon un sous-ensemble respectif de la pluralité de valeurs de caractéristiques primaires.

10. Un système informatique doté d'au moins un processeur matériel configuré pour exécuter :
un extracteur de caractéristiques configuré pour déterminer une pluralité de valeurs de caractéristiques primaires caractérisant une entité logicielle s'exécutant sur le système informatique ;
une pluralité de processeurs de caractéristiques configurés pour déterminer une pluralité de valeurs de caractéristiques dérivées en fonction de la pluralité de valeurs de caractéristiques primaires, dans lequel un processeur de caractéristiques sélectionné parmi la pluralité de processeurs de caractéristiques est configuré pour déterminer une valeur de caractéristique dérivée sélectionnée en fonction d'un sous-ensemble sélectionné de la pluralité de valeurs de caractéristiques primaires ;
un module de substitution de données connecté à la pluralité de processeurs de caractéristiques et configuré pour, en cas d'échec de la détermination de la valeur de caractéristique sélectionnée, fournir une valeur de substitution pour remplacer la valeur de caractéristique dérivée sélectionnée manquante ; et
un module de synthèse configuré pour déterminer si l'entité logicielle est malveillante en fonction de la pluralité des valeurs de caractéristiques dérivées et en fonction de la valeur de substitution.

11. Le système informatique selon la revendication 10, dans lequel la fourniture de la valeur de substitution comprend l'utilisation d'au moins un processeur matériel pour calculer la valeur de substitution selon une valeur de référence déterminée par un autre processeur de fonctionnalités s'exécutant sur un dispositif distinct du système informatique.

12. Le système informatique selon la revendication 11, dans lequel la fourniture de la valeur de substitution comprend le calcul de la valeur de substitution selon une statistique d'une pluralité de valeurs de référence, la pluralité de valeurs de référence étant déterminée par d'autres processeurs de fonctionnalités s'exécutant sur des dispositifs distincts du système informatique.

13. Le système informatique selon la revendication 10, dans lequel la fourniture de la valeur de substitution comprend la récupération sélective de la valeur de substitution à partir d'une base de données stockant une pluralité de valeurs de référence déterminées par d'autres processeurs de fonctionnalités s'exécutant sur des dispositifs distincts du système informatique.

14. Le système informatique selon la revendication 13, dans lequel le module de substitution de données est configuré pour sélectionner la valeur de substitution parmi la pluralité de valeurs de référence en fonction de l'état actuel du système informatique.

15. Le système informatique selon la revendication 13, dans lequel le module de substitution de données est configuré pour sélectionner la valeur de substitution parmi la pluralité de valeurs de référence en fonction d'un type de dispositif du système informatique.

16. Le système informatique selon la revendication 10, dans lequel la fourniture de la valeur de substitution comprend :
transmission d'une requête de données à un serveur de sécurité distant, la requête de données étant formulée selon un indicateur de l'état actuel du système informatique ; et
en réponse à la transmission de la requête de données, réception de la valeur de substitution du serveur de sécurité distant.

17. Le système informatique selon la revendication 16, dans lequel la requête de données comprend au moins une valeur de la pluralité de valeurs de caractéristiques primaires.

18. Le système informatique selon la revendication 10, dans lequel chaque processeur de caractéristiques de la pluralité de processeurs de caractéristiques comprend un réseau neuronal entraîné à déterminer une probabilité que l'entité logicielle soit malveillante selon un sous-ensemble respectif de la pluralité de valeurs de caractéristiques primaires.

19. Un support non transitoire lisible par ordinateur stockant des instructions qui, lorsqu'elles sont exécutées par au moins un processeur matériel d'un système informatique, amènent ce dernier à effectuer une détection de logiciels malveillants comprenant :
déterminer une pluralité de valeurs de caractéristiques primaires caractérisant une entité logicielle s'exécutant sur le système informatique ;
exécutant une pluralité de processeurs de caractéristiques pour déterminer une pluralité de valeurs de caractéristiques dérivées selon une pluralité de valeurs de caractéristiques primaires, dans lequel un processeur de caractéristiques sélectionné parmi la pluralité de processeurs de caractéristiques est configuré pour déterminer une valeur de caractéristique dérivée sélectionnée selon un sous-ensemble sélectionné de la pluralité de valeurs de caractéristiques primaires ;
en cas d'impossibilité de déterminer la valeur de la caractéristique dérivée sélectionnée, fournir une valeur de substitution pour remplacer la valeur manquante de la caractéristique dérivée sélectionnée ; et
déterminer si l'entité logicielle est malveillante en fonction de la pluralité des valeurs de caractéristiques dérivées et en fonction de la valeur de substitution.
